# EUROPEAN PATENT SPECIFICATION

(11) **EP 1 491 545 B1**
(45) Date of publication and mention of the grant of the patent: **14.01.2009**
(21) Application number: 04102684.0
(22) Date of filing: 14.06.2004
(51) Int. Cl.: C07F 7/00, C08K 5/54

(54) **Method of preparing a composite of hydrophobated amorphous silica employing blocked mercaptoalkoxysilanes**
Verfahren zur Herstellung eines hydrophobierten amorphen Kieselsäurekomposits unter Verwendung blockierter Mercaptoalkoxysilane
Procédé pour la préparation d'un composite de silice amorphe hydrophobée en utilisant mecaptoalkoxysilanes bloqués

(30) Priority: 25.06.2003 US 606075
(43) Date of publication of application: 29.12.2004
(73) Proprietor: The Goodyear Tire & Rubber Company, Akron, OH 44316-0001 (US)
(72) Inventor: Cohen, Martin Paul, Fairlawn, Ohio 44333 (US)
(74) Representative: Kutsch, Bernd

(56) References cited:
- WO-A-99/09036
- WO-A-99/32496
- US-A- 6 127 468
- US-B1- 6 251 999

## Description

The invention relates to amorphous silica (e.g. silica aggregates) having hydroxyl groups (e.g. silanol groups) on its surface which has been pre-reacted (e.g. pre-hydrophobated) with a combination of blocked mercaptoalkoxysilane coupling agent and an alkyl silane to form a composite. The blocked mercaptoalkoxysilane is composed of a mercaptosilane where the hydrogen moiety of the mercaptan moiety is substituted with a blocking moiety which allows the alkoxy groups of the mercaptoalkoxyosilane to react with a precipitated silica having hydroxyl groups (e.g. silanol groups) on its surface for the silica pre-treatment thereof yet renders the mercapto portion of the mercaptoalkoxysilane as being relative inert insofar as subsequent coupling reaction with the elastomers until the blocked mercapto portion of the mercaptoakoxysilane becomes unblocked. Further, generation and release of reaction byproducts (e.g. alcohols) caused by reaction of alkoxy groups of the mercaptoalkoxysilane and byproducts from reaction of alkoxy or halogen groups of the alkylsilane with the hydroxyl groups of the amorphous silica is basically relegated to the pretreatment (said pre-reaction) of the blocked mercaptoalkoxysilane and alkylsilane with the silica and thereby essentially dissociated from and consequently eliminated, or at least minimized, during the actual subsequent mixing with the elastomer(s). Upon subsequent unblocking of the blocked mercapto moiety of the mercaptoalkoxysilane of the pre-hydrophobated silica within the rubber composition during the subsequent vulcanization of the rubber composition at an elevated temperature, the silica becomes coupled via the mercapto group of the mercaptoalkoxysilane (the mercaptoalkoxysilane being attached to the silica since its alkoxy group has been previously been pre-reacted with the silica prior to addition to the elastomer) to one or more elastomers of the rubber composition.

### Background of the Invention

Tires may be prepared with a rubber component which contains a precipitated silica which is hydrophobated in situ within the elastomer host by addition of both an organomercaptosilane and an alkyl silane. For example, see US-A- 4,474,908.

Tires may also be prepared with a rubber component in which both an organosilyl polysulfide and an alkylsilane are individually added to a silica-containing rubber composition to treat the amorphous silica in-situ within the rubber host with both a hydrophobating agent (the alkylsilane) and a silica coupler (the organosilyl polysulfide compound). For example, see US-A-5,780,538.

Tires may further be prepared with a rubber component which contains a precipitated silica which has been pre-treated with a combination of organomercaptosilane and alkylsilane prior mixing with the rubber composition. For example, see US-A- 6,573,324.

Tires may also be prepared with a rubber component which contains a blocked organomercaptosilane as a coupling agent to aid in coupling the silica to one or more diene-based elastomers in which an unblocking agent is used to unblock the blocked organomercaptosilane within the rubber composition. For example, see WO 99/09036 patent publication and US-A- 6,127,468. Organomercaptosilane coupling agents are indicated as presenting superior coupling activity for coupling synthetic silica to various diene-based elastomers. However, apparently their relatively high chemical reactivity can lead to unacceptably high viscosities of the associated rubber compositions during processing as well as a usually disagreeable odor. Mercaptosilane derivatives are presented in which the mercapto group is blocked by replacing the mercapto hydrogen group by another group (the blocking group) to reduce the chemical activity of the mercapto group of the mercaptosilane. The blocking group generally contains an unsaturated heteroatom or a carbon which is chemically bound directly to the sulfur atom of the mercapto group by a single bond. Such blocking group may also be comprised of one or more carboxylate ester or carboxylic acid functional groups. Such blocked mercaptosilanes may be used in the preparation of synthetic amorphous silica reinforced diene-based elastomer compositions in which they are unblocked by an unblocking agent in situ within the rubber composition.

However, the blocked organomercaptosilane is required to be blended with amorphous silica (e.g. precipitated silica) and elastomers in a rubber mixing apparatus (e.g. an internal rubber mixer) and thereby involves both production and emission of alcohol and or other byproduct(s) in situ within the rubber composition by the reaction of the still blocked organomercaptosilane (prior to its unblocking) with hydroxyl groups contained on the surface of the amorphous silica (e.g. precipitated silica aggregates). The resulting rubber composition also contains such byproducts.

It is a significant aspect of this invention to circumvent, disengage and thereby eliminate, or at least minimize, such byproduct, particularly alcohol byproduct, formation and emission in situ within the rubber composition during the elastomer mixing phase.

Accordingly, it is an aspect of this invention to pre-treat a precipitated silica which contains alcohol groups (e.g. silanol groups) on its surface with a combination of a blocked mercaptoalkoxyosilane and an alkyl silane prior to mixing the precipitated silica and the blocked mercaptoalkoxysilane with the elastomer(s).

In practice, it is recognized that precipitated silica aggregates are typically hydrophilic (water attracting) in nature and, in order to aid in dispersing the silica aggregates in various rubber compositions, it is sometimes desired to make the silica aggregates more hydrophobic (water repelling) in nature and therefore more compatible with the rubber. Accordingly, a hydrophobating agent may be added to a rubber composition in addition to the precipitated silica to combine with the silica in-situ within the rubber host to make the silica more hydrophobic in nature.

However, it is considered herein, for tire tread applications where enhanced properties such as, for abrasion resistance, are often sought, and particularly where a good homogeneous dispersion in the rubber host is often sought, that an in-situ modification of the amorphous silica within a viscous rubber host on a hit and miss basis, under relatively harsh high sheer and high temperature conditions is a relatively inefficient procedure of modifying the amorphous silica for use in rubber compositions which are intended to be silica reinforced, particularly where both an organomercaptosilane and alkyl silane are used which would compete within the rubber composition for reaction sites on the silica surface.

Accordingly, it is proposed herein to provide a tire having a component comprised of a rubber composition which contains particulate pre-hydrophobated precipitated silica aggregates where the silica aggregates are added to, or mixed with, the rubber composition in a pre-hydrophobated form instead of more inefficiently subsequently hydrophobating the silica aggregates in situ within the elastomer host.

Historically, according to US-A- 5,708,069 and 5,789,514 a silica gel may be derived by hydrophobating a silica hydrogel with both an organomercaptosilane and alkyl silane and drying the product. The resulting hydrophobated silica gel may be blended with natural rubber and/or synthetic rubber. This invention is intended to be exclusive of recovered silica gels. It is focused on precipitated silica aggregates.

Also, historically, according to US-A- 5,750,610, an organosilicate-modified silica gel may be hydrophobated with both an organomercaptosilane and alkyl silane and the dried, treated organosilicate-modified silica gel blended with natural rubber and/or synthetic rubber. This invention is intended to be exclusive of such modified silica gels.

A general description of silica gel and precipitated silica may be found, for example, in the Encyclopedia of Chemical Technology, Fourth Edition (1997), Volume 21, Kirk-Othmer, silica gel is described in Pages 1020 through 1023 as a "...coherent, rigid, continuous three-dimensional network of spherical particles of colloidal silica." Precipitated silica is described on Pages 1023 through 1026 as being
"...composed of aggregates (or secondary particles) of ultimate (or primary) particles of colloidal-size silica that have not become linked in a massive gel network during the preparation process."

Further "Particulate silica powders have a more open structure with higher pore volume than do dried pulverized gels ...".

The pre-hydrophobated precipitated silica aggregates for this invention are intended to be exclusive of silica gels of a three dimensional network of spherical particles as referenced in the above Encyclopedia of Chemical Technology.

A further descriptive discussion of silica gels and precipitated silicas may be found, for example, in US-A- 5,094,829.

The proposal for this invention is for a tire having a component of a rubber composition which contains pre-hydrophobated precipitated silica aggregates of elementary silica particles instead of precipitated silica aggregates, which are hydrophobated in situ within the elastomer host with individually added hydrophobating compounds, prepared by treatment of a precipitated or colloidal, preferably precipitated, silica by both a blocked mercaptoalkoxysilane and an alkylsilane, is considered herein to be novel and a departure from past practice.

In the description of this invention, the term "phr" relates to parts by weight for a material or ingredient per 100 parts by weight elastomer(s)". The terms "rubber" and "elastomer" may be used interchangeably unless otherwise indicated. The terms "cure" and "vulcanize" may be used interchangeably unless otherwise indicated.

### Summary and Practice of the Invention

The invention relates to a process of preparing a hydrophobated amorphous silica composite comprises reacting an amorphous silica which contains hydroxyl groups (e.g. silanol groups) on its surface with a combination of a blocked mercaptoalkoxysilane and an alkylsilane (said alkoxysilane moiety of said mercaptoalkoxysilane and said alkoxysilane or haloalkane moiety of said alkylsilane thereby reacted with said hydroxyl groups on said amorphous silica according to claim 1.

The saturated alkyl radical R is, for example, a methyl, ethyl, isopropyl, n-butyl or octadecyl radical.

The radical Z is, for example, represented as (R¹O) , wherein R¹ is a saturated alkyl radical having from one to 3 carbon atoms such as, for example, methyl, ethyl and isopropyl radicals, preferably at least one of methyl and ethyl radicals.

In additional accordance with this invention, said process of hydrophobating said amorphous includes removing chemical reaction byproducts, and particularly alcohol byproducts from reaction of the alkoxy group of the mercaptoalkoxysilane and alcohol and/or hydrogen halide byproducts from the reaction of the alkoxy and/or halogen groups of said alkylsilane with hydroxyl groups of said amorphous silica.

It is envisioned that said byproducts, which are typically conventionally water soluble, can be readily removed from the hydrophobated silica by water washing and/or water removal. The byproducts may also be removed by evaporation, distillation, or neutralization (in the case of hydrogen halides), based on their individual compositions and physical and chemical properties. The specific means of removal will be dependent on the nature of the byproducts.

In further accordance with this invention, a hydrophobated silica is provided by said process and particularly said hydrophobated silica which is substantially and preferably essentially free, of alcohol and hydrogen halide byproducts (formed by reacting said amorphous silica with said combination of mercaptoalkoxysilane and alkylsilane).

In further accordance with this invention, a process of preparing a rubber composition is disclosed. This process comprises the steps of:
(A) mixing at least one conjugated diene-based elastomer and said composite of hydrophobated amorphous silica;
(B) mixing an unblocking agent with the resulting mixture of step (A); and
(C) allowing the resulting mixture to sulfur vulcanize.

In one aspect, said hydrophobated amorphous silica is substantially free, and preferably essentially free, of alcohol and hydrogen halide byproducts formed by pre-reaction with combination of said blocked mercaptoalkoxysilane and said alkylsilane prior to mixing with said elastomer.

In a further aspect of the invention, the chemical activity of the mercapto group of said mercaptoalkoxysilane is substantially, or preferably entirely, blocked from interacting with said diene-based elastomer until said unblocking agent is added and allowed to subsequently unblock said blocked mercapto group of said blocked mercaptoalkoxysilane and thereby enable the unblocked mercapto group to interact with said diene-based elastomer.

Preferably the blocked mercaptoalkoxysilane is the blocked mercaptoalkoxysilane of Formula (II-A).

Preferably the blocked mercaptoalkoxysilane is the blocked mercaptoalkoxysilane of Formula (II-A) wherein r=1 and s=1.

For said blocked mercaptoalkoxysilane, Y is preferably C(=O).

For said blocked mercaptoalkoxysilane, X is preferably RO.

Said unblocking agent is preferably selected from at least one of N,N'-diphenylguanidine and N,N'-di-ortho-tolylguanidine.

It is to be appreciated that the said unblocking agent is a material capable of unblocking the blocked mercaptoalkoxysilane to enable the mercapto group, or moiety, of the mercaptoalkoxysilane to interact with the diene based elastomer(s). It is to be appreciated that choice of the unblocking agent will depend upon the blocking group, or moiety, used to block the chemical activity of the mercaptoalkoxysilane itself insofar as interacting with a diene-based elastomer is concerned, which would be readily understood by one having skill in such art.

In further accordance with this invention, a method of preparing a rubber composition is disclosed. This method comprises, based on parts by weight per 100 parts by weight (phr) of diene-based elastomer:
(A) mixing at least one conjugated diene-based elastomer with 10 to 120, alternately 40 to 100, phr of reinforcing filler at a temperature in a range of from 140°C to 180°C, wherein said reinforcing filler is comprised of
   (1) a composite of said hydrophobated amorphous silica composite which is preferably substantially free of alcohol and hydrogen halide byproducts formed by said pre-reaction with said blocked mercaptoalkoxysilane and said alkylsilane prior to mixing with said elastomer, and, optionally
   (2) at least one additional reinforcing filler selected from at least one of carbon black and an additional synthetic amorphous silica, preferably a precipitated silica;
(B) mixing an unblocking agent with the mixture of step (A), at a temperature in a range of from 100°C to 125°C and concurrently or thereafter mixing sulfur curative therewith at a temperature in a range of from 100°C to 125°C, and thereafter
(C) curing the resulting mixture at an elevated temperature in range of from 140°C to 170°C.

In one aspect of the invention, said composite of pre-reacted (pre-hydrophobated) silica aggregates is prepared by pre-reacting
(A) silica in an aqueous colloidal form thereof, or, more preferably,
(B) amorphous (preferably precipitated) silica aggregates with said blocked mercaptoalkoxysilane and said alkylsilane, preferably in a weight ratio of said blocked mercaptoalkoxysilane to said alkylsilane in a range of from 10/90 to 90/10;

In further accordance with this specification, a rubber composition is provided which is prepared by the said process of this invention.

In additional accordance with this specification, an article of manufacture is provided having at least one component comprised of said rubber composition.

In further accordance with this specification, a tire is provided having at least one component comprised of said rubber composition.

In additional accordance with this specification, said tire component is a tire tread and particularly a tire tread intended to be a running surface of a tire.

In further accordance with the specification, the prepared rubber composition is free of functionalized siloxanes.

Representative alkylsilanes of Formula (I) are, for example, trichloro methyl silane, dichloro dimethyl silane, chloro trimethyl silane, trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, and diethoxy dimethyl silane.

Accordingly, said alkyl silanes may be alkoxy alkyl silanes with the alkoxy group being reactive with the hydroxyl groups (e.g. silanol groups) contained on the surface of precipitated silica aggregates.

Further accordingly, said alkyl silanes may be haloalkyl silanes with the halogen group (e.g. chlorine or bromine and preferably chlorine) being reactive with the hydroxyl groups (e.g. silanol groups) contained on the surface of precipitated silica aggregates.

In practice, for said blocked mercaptoalkoxysilane, the term "alkyl" is intended to include straight chain, branched chain and cyclic alkyl groups; the term "alkenyl" is intended to include straight chain, branched chain and cyclic alkenyl groups containing one or more carbon-to-carbon double bonds. Representative examples of such alkyl groups are, for example, methyl, ethyl, propyl, and isobutyl groups. Representative examples of aralkyl groups are, for example, phenyl, tolyl and phenethyl groups.

The term "cyclic alkyl" or "cyclic alkenyl" is intended to also include bicyclic and higher cyclic structures, as well as cyclic structures which are further substituted with alkyl groups. Representative of such groups are intended to include, for example, norbornyl, norbornenyl, ethylnorbornyl, ethylnorbornenyl, ethylcyclohexyl, ethylcyclohexenyl, and cyclohexylcyclohexyl groups.

Representative of preferred blocked mercaptoalkoxysilanes are, for example, mercaptoalkoxysilanes where Y is R(C=O) , where R has a primary carbon attached to the carbonyl as an alkyl group which contains from 2 to 12, preferably from 6 through 8, carbon atoms; where X₃ is SiGSC(=O)GC(=O)SGSiX₃ and where G is a divalent hydrocarbon radical.

Representative examples of G are, for example, (CH₂)ₙ radicals where n is a value of from 1 to 12, diethylene cyclohexane, 1,2,4-triethylene cyclohexane, and diethylene benzene radicals. In practice, it is preferred that the sum of the carbon atoms within the G groups within the molecule is from 3 to 18, more preferably from 6 to 14. It is considered herein that such amount of carbon atoms in the blocked mercaptoalkoxysilane may aid in facilitating the dispersion of the composite of pre-reacted silica into the diene-based elastomer(s), whereby it is envisioned that a balance of physical of properties in the cured reinforced elastomer(s) is improved.

In practice, the R groups of the blocked mercaptoalkoxysilane are preferably selected from hydrogen atom and alkyl groups having from 1 through 4 carbon atoms.

Representative examples of X are, for example, methoxy, ethoxy, isobutoxy, propoxy, isopropoxy, acetoxy and oximato groups. Preferably, X is selected from methoxy, acetoxy and ethoxy groups. In practice, at least one X must be reactive (i.e., hydrolyzable).

In practice, for preferred blocked mercaptoalkoxysilanes, p is a value of 0 through 2; X is RO- or RC(=O)O-; R is a hydrogen, phenyl, isopropyl, cyclohexyl, or isobutyl radical; and G is a substituted phenyl or substituted straight chain alkyl radical having from 2 to 12 carbon atoms. For a more preferred block mercaptoalkoxysilane, the value of p is zero; X is an ethoxy group and G is an alkyl group which contains from 3 to 12 carbon atoms.

Representative examples of various blocked mercaptoalkoxy silanes are, for example, disclosed in claim 6.

In practice, mixtures of various blocked mercaptoalkoxysilanes may be used, particularly where synthetic methods of their preparation results in a mixture of resultant mercaptoalkoxysilanes or where mixtures of blocked mercaptosilanes are intentionally used for their various functionalities. In one aspect, it is understood that the partial hydrolyzates of the blocked mercaptoalkoxysilanes (e.g. blocked mercaptoalkoxysiloxanes) may also be encompassed by the blocked mercaptoalkoxysilanes herein, in that such partial hydrolyzates will be a side product of most methods of manufacture of the blocked mercaptoalkoxysilane or can occur upon storage of the blocked mercaptoalkoxysilane, especially in moist, humid conditions.

Various methods of preparation of various blocked mercaptoalkoxysilanes may be found, for example, in EP-A- 958 298, US-A-3,692,812 as well as in various literature publications such as, for example, in Gornowicz, G., "Preparation of Silylalkanethiols", J. Org. Chem., Volume 33, No. 7, July, 1968; Vorkonov, M. G., et al., Trialkoxysilylalkanethiols and Bis(trialkoxysilylakyl)sulfides, Izvestiya Akademii Nauk SSSR and Seriya Khimicheskeya, No. 8, Pages 1849 through 1851, August 1977.

In practice, the blocked mercaptoalkoxysilanes for use in this invention are used first, as a component in the preparation of a chemically treated, hydrophobated silica (e.g. precipitated silica) composite and, secondly, as a resultant component of such composite, as a coupling agent to couple the amorphous silica (which contains hydroxyl groups on its surface) to various diene-based elastomers (which contain carbon-to-carbon double bonds). The blocked mercaptoalkoxysilanes are seen herein as enabling the use of both a relatively high efficiency of the alkoxysilane for pre-reacting with the amorphous silica (preferably a precipitated silica) and a relatively high efficiency of the mercapto group for subsequent mixing with and then interacting with the elastomer(s) when it becomes unblocked without the detrimental side effects typically associated with the use of mercaptosilanes, such as pre-mature high processing viscosity of the rubber composition for an unblocked mercaptoalkoxysilane and odor. These benefits are accomplished because the mercaptan group initially is non-reactive because of the blocking group. The blocking group substantially prevents the mercapto group of the mercaptoalkoxysilane from prematurely coupling to the diene-based elastomer(s) polymer during the mixing of the rubber ingredients. Thus, in practice, the reaction of the alkoxysilane group with the amorphous silica is conducted and completed during the pre-treatment step of combining the silica with the combination of alkylsilane and blocked mercaptoalkoxysilane composition. Mixing of the pre-treated amorphous silica with the diene-based elastomer(s) is then done and substantial coupling of the pre-treated silica with the diene-based elastomer(s) is avoided until later in the rubber processing and possibly delayed until the actual curing of the rubber composition at the elevated temperature, thereby minimizing the undesirable premature curing (scorch) and the associated undesirable increase in viscosity of the rubber composition itself during the mixing stage and possibly subsequent processing stage(s), such as for example processing of the mixed rubber composition to form shaped, uncured rubber compositions such as tire treads and other tire components. Often, it is considered herein, better cured silica-rich rubber composition physical properties might also be obtained, such as, for example, a better balance of high modulus and abrasion resistance, because of the avoidance of premature curing.

In practice, the composite of pre-reacted amorphous silica, mercapalkoxyosilane(s) and alkyl silane is mixed with the diene-based elastomer(s) and one or more rubber compounding ingredients. The composite may be added before, during or after any additional reinforcing fillers (e.g. other amorphous silica, carbon black and/or carbon black which contains silica domains on its surface) are mixed with the elastomer(s).

When reaction of the mercapto group of the mercaptoalkoxysilane component of the composite is desired to couple the amorphous silica to the diene-based elastomer is desired, a deblocking agent is added to the mixture to deblock the blocked mercaptosilane. The unblocking agent is added to facilitate the reactivity of the mercapto group. An exemplary amount of the unblocking agent may be, for example, 0.1 to 5 phr; more preferably in the range of from 0.5 to 3 phr.

In practice, the unblocking agent may be a nucleophile containing a hydrogen atom sufficiently labile such that hydrogen atom could be transferred to the site of the original blocking group to form the mercaptoalkoxysilane. Thus, with a blocking group acceptor molecule, an exchange of hydrogen from the nucleophile would occur with the blocking group of the blocked mercaptoalkoxysilane to form the unblocked mercaptoalkoxysilane and the corresponding derivative of the nucleophile containing the original blocking group. This transfer of the blocking group from the mercaptoalkoxysilane to the nucleophile could be driven, for example, by a greater thermodynamic stability of the products (mercaptoalkoxysilane and nucleophile containing the blocking group) relative to the initial reactants (blocked mercaptoalkoxysilane and nucleophile). For example, carboxyl blocking groups unblocked by amines would be seen to yield amides, sulfonyl blocking groups unblocked by amines would be seen to yield sulfonamides, sulfinyl blocking groups unblocked by amines would be seen to yield sulfinamides, phosphonyl blocking groups unblocked by amines would be seen to yield phosphonamides, phosphinyl blocking groups unblocked by amines would be seen to yield phosphinamides. What is important is that regardless of the blocking group initially present on the blocked mercaptosilane and regardless of the unblocking agent used, the initially substantially inactive (from the standpoint of coupling to the diene-based elastomer) blocked mercaptoalkoxysilane is substantially converted at the desired point in the rubber processing procedure to the active mercaptoalkoxysilane. It is noted that partial amounts of the nucleophile may be used (e.g. a stoichiometric deficiency), or even weak nucleophile, if one were to only partially unblock the blocked mercaptoalkoxysilane to control the degree of coupling involved with a specific rubber composition.

The unblocking agent could be added to the rubber mixture, for example, in the curative package (together with sulfur curative) or, alternatively, at any other mixing stage in the rubber mixing process as a single component, although practically it is added subsequent to the composite of pre-reacted amorphous silica and usually together with the curative in the final curative addition mixing stage.

Various classes of materials which can act as unblocking agents, but not normally effective as cure accelerators, allowing for selection between the two, are various oxides, hydroxides, carbonates, bicarbonates, alkoxides, phenoxides, sulfenamide salts, acetyl acetonates, carbon anions derived from high acidity C-N bonds, malonic acid esters, cyclopentadienes, phenols, sulfonamides, nitrites, fluorenes, tetra-alkyl ammonium salts, and tetra-alkyl phosphonium salts.

Representative examples of various unblocking agents are, for example, such nucleophiles as amines, imines and guanidines that contain at least one N-H bond. Some examples include: N, N'-diphenylguanidine, N, N'-di-orthotolylguanidine, hexamethylenetetramine and 4,4'-diaminodiphenylmethane.

Thus, when it is desired to unblock the blocked mercaptoalkoxysilane to enable the mercapto group (moiety) to interact with the elastomer(s) to thereby couple the pre-treated, hydrophobated, silica to the elastomer(s) it is seen that various unblocking agents may be used, depending somewhat upon the blocking moiety, or agent, used to block the chemical activity of the mercapto group of the blocked mercaptoalkoxysilane.

In practice, if alcohol or water is present in the mixture (a small amount of moisture is usually present) a catalyst (such as for example tertiary amines, Lewis acids or thiols) may conceivably be used to initiate and promote loss of the blocking agent and thereby liberate the corresponding chemical activity of the mercapto group of the mercaptoalkoxysilane. Alternately, the unblocking agent may be a nucleophile which contains a hydrogen atom sufficiently liable to liberate the chemical activity of the mercapto group of the blocked mercaptoalkoxysilane such that the hydrogen atom could be transferred to the site of the original blocking group used to block the mercaptoalkoxysilane. Therefore, with a blocking group acceptor molecule, an exchange of hydrogen would occur with the blocking group of the blocked mercaptoalkoxysilane. This transfer of the blocking group to the nucleophile could be driven, for example, by a greater thermodynamic stability of the products (mercaptoalkoxysilane and nucleophile containing the blocking group). For example, if the nucleophile were an amine containing an N-H bond, transfer of the blocking group from the blocked mercaptoalkoxysilane would unblock the mercapto group and one of several classes of amides corresponding to the type of blocking group used. For example, carboxy blocking groups unblocked by amines would yield amides, sulfonyl blocking groups unblocked by amines would yield sulfonamides, sulfinyl blocking groups unblocked by amines would yield sulfinamides, phosphonyl blocking groups unblocked by amines would yield phosphonamides, phosphinyl blocking groups unblocked by amines would yield phosphinamides. An important aspect is that regardless of the blocking group initially present on the blocked mercaptoalkoxysilane and regardless of the unblocking agent used, the initially substantially inactive mercapto group from the viewpoint of interacting with the diene-based elastomer(s) is substantially converted at a desired point of time in the rubber compounding process to the active mercapto group activity of the pre-treated silica.

In practice, the unblocking group may be added, for example, with the curative package (sulfur and appropriate accelerators) or, if desired, at another stage in the rubber mixing procedure.

Representative, of various nucleophiles may include, for example, primary and secondary amines, or amines which contain C=N double bonds such as imines or guanidines; provided however that the amine contains at least one C-N bond. Numerous examples of guanidines, amines and imines which may be useful are recited in Rubber Chemicals, J.V. Alphen, Plastics and Rubber Research Institute TNO, Delft Holland; 1973. Various examples include, for example, the aforesaid N, N'-diphenylguanidine, N, N'-di-orthotolylguanidine, hexamethylenetetramine and 4,4'-diaminodiphenylmethane. In addition, N, N', N"-triphenylguanidine, orthobiguanide, cyclohexylethylamine, dibutylamine and 4,4'-diaminodiphenylmethane may be considered.

In practice, it is usually desired that the rubber composition is preferably essentially free of functionalized siloxanes, especially those of the type referenced in AU-A-10082/97. More preferably, the rubber composition is free of functionalized siloxanes.

In practice, where the composite of pre-reacted (pre-hydrophobated) precipitated silica aggregates are prepared from colloidal silica, such composite might be recovered, for example, from treated colloidal silica, for example as a treated silica hydrosol, with the aid of acid addition to the treated colloidal silica (for example, sulfuric acid or hydrochloric acid) followed by water washing and drying the recovered hydrophobated silica as a hydrophobated silica gel or as a hydrophobated precipitated silica.

While this invention is not intended to be directed to a specific preparation technique (preparation of silica hydrosols, recovery of silica gels and precipitated silicas, etc.) of the pre-hydrophobated precipitated silica itself, for education purposes in this regard, reference might be made to the aforesaid Condensed Chemical Dictionary and US-A- 5,094,829 as well as 5,708,069, 5,789,514 and 5,750,610 for a more detailed discussion.

Representative examples of mercaptoalkoxysilanes of Formula (II-A) and (II-B), prior to the blocking thereof with the "Z" moiety, are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

In further accordance with this invention, a tire of this invention is provided with said component which may be, for example, a tire tread such as for example a tread, tread cap and/or tread base; tire sidewall; tire carcass component such as for example a carcass cord ply coat; tire sidewall stiffening insert; an apex adjacent to or spaced apart from a tire bead; tire chafer; and tire bead component.

Significantly, by the practice of this invention, an addition of a coupling agent to the rubber composition for an in-situ interaction is not considered herein as being necessary for the composite of pre-reacted (pre-hydrophobated) amorphous silica to effectively reinforce the rubber composition because the composite of the pre-reacted silica aggregates contain an integral coupling agent, namely the blocked mercaptoalkoxysilane.

In the practice of this invention, the various components of the tire may be a rubber composition comprised of various conjugated diene based elastomers. Such diene-based elastomers may be polymers and copolymers of conjugated dienes, such as, for example, isoprene and 1,3-butadiene, and copolymers of at least one conjugated diene hydrocarbon and vinyl aromatic compound selected from styrene and alphamethyl styrene, preferably styrene.

For example, representative of such elastomers are natural cis 1,4-polyisoprene rubber, synthetic cis 1,4-polyisoprene rubber, cis 1,4-polybutadiene rubber, high vinyl polybutadiene rubber having a vinyl 1,2 content in a range of 10 percent to 90 percent, styrene/butadiene copolymer (SBR) rubber (aqueous emulsion or organic solution polymerization prepared copolymers) and including organic solvent polymerization prepared SBR having a vinyl 1,2- content in a range of 10 to 90 percent based on its polybutadiene derived portion and a polystyrene content in a range of 10 to 60 percent based upon the copolymer, styrene/high trans 1,4-butadiene copolymer rubber having a trans-1,4 content in the range of 40 to 80 percent based on its polybutadiene derived portion, styrene/isoprene/butadiene terpolymer rubber, butadiene/acrylonitrile rubber, styrene/isoprene copolymer and isoprene/butadiene copolymer rubber, 3,4-polyisoprene rubber and trans 1,4-polybutadiene rubber.

Further representative of such elastomers are functionalized elastomers as, for example, amine and silane functionalized organic solution polymerization prepared styrene/butadiene copolymers (functionalized S-SBR's) and amine and silane functionalized organic solution polymerization prepared cis 1,4-polybutadiene elastomers may also be used.

Additional representative of such elastomers are, for example, organic solution polymerization prepared tin coupled elastomers such as for example, tin coupled styrene/butadiene copolymers may also be used.

Tin coupled copolymers of styrene/butadiene may be prepared, for example, by introducing a tin coupling agent during the styrene/1,3-butadiene monomer copolymerization reaction in an organic solvent solution, usually at or near the end of the polymerization reaction. Such coupling of styrene/butadiene copolymers is well known to those having skill in such art.

In practice, it is usually preferred that at least 50 percent and more generally in a range of 60 to 85 percent of the Sn (tin) bonds in the tin coupled elastomers are bonded to butadiene units of the styrene/butadiene copolymer to create Sn-dienyl bonds such as butadienyl bonds.

Creation of tin-dienyl bonds can be accomplished in a number of ways such as, for example, sequential addition of butadiene to the copolymerization system or use of modifiers to alter the styrene and/or butadiene reactivity ratios for the copolymerization. It is believed that such techniques, whether used with a batch or a continuous copolymerization system, is well know to those having skill in such art.

Various tin compounds, particularly organo tin compounds, may be used for the coupling of the elastomer. Representative of such compounds are, for example, alkyl tin trichloride, dialkyl tin dichloride, yielding variants of a tin coupled styrene/butadiene copolymer elastomer, although a trialkyl tin monochloride might be used which would yield simply a tin-terminated copolymer.

Examples of tin-modified, or coupled, elastomers are, for example, styrene/butadiene copolymer elastomers exemplified for example in US-A-5,064,901.

Various additional commercially available amorphous silicas may also be added to the rubber composition together with the said pre-treated amorphous silica composite for the reinforcement of the diene based elastomers. Such silicas are typically characterized by the aforesaid BET and CTAB surface areas. Representative of such silicas, for example, only and without limitation, are silicas available from PPG Industries under the Hi-Sil trademark with designations 210, 243, etc; silicas available from Rhodia, with designations of Zeosil 1165MP and Zeosil 165GR, silicas available from Degussa AG with designations, for example, VN2 and VN3, and silicas available from Huber such as, for example, Zeopol 8745 and Zeopol 8715.

It is contemplated herein that a coupling agent be used in conjunction with such additional silica for rubber composition having a moiety reactive with hydroxyl groups (e.g. silanol groups) on said additional silica and another moiety interactive with at least one of said diene-based elastomers such as, for example a bis(3-triethoxysilyilpropyl) polysulfide having an average of from 2 to 4, and alternatively an average of from 2 to 2.6 or an average of from 3.5 to 4, connecting sulfur atoms in its polysulfidic bridge.

It is readily understood by those having skill in the art that the rubber composition of the tread rubber would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The tires can be built, shaped, molded and cured by various methods which will be readily apparent to those having skill in such art.

## Claims

1. A method of preparing a composite of hydrophobated amorphous silica which comprises reacting said an amorphous silica having hydroxyl groups on its surface with a combination of a blocked mercaptoalkoxysilane and an alkylsilane:
wherein said alkylsilane is of the general formula (I):
(I) Zₙ - Si - R₄₋ₙ
wherein R is a saturated alkyl radical having from one to 18, preferbaly form one to 8, carbon atoms, n is a value of from 1 to 3, and Z is a radical selected from a chlorine, bromine or alkoxy radicals,
wherein said blocked mercaptoalkoxysilane is selected from blocked mercaptoalkoxysilanes of the general formulas (II-A) and (11-B):
(II-A) [[(ROC(=O))ₚ - (G)ⱼ]ₖ - Y - S]ᵣ - G - (SiX₃)ₛ
(II-B) [(X₃Si)_{q} - G]ₐ - [Y - S - G - SiX₃]_{b}]_{c}
wherein Y is a polyvalent species (Q₂)A(=E), which is preferably a radical selected from the group consisting of -C(=NR)- ; —SC(=NR)— ; —SC(=O)— ; (—NR)C(=O)— ; (-NR)C(=S) ; -OC(=O) ; OC(=S) ; C(=O) ; SC(=S); C(=S); S(=O); OS(=O)₂ ; (NR)S(=O)₂ ; SS(=O)-;-OS(=O)-; (-NR)S(=O)- ; -SS(=O)₂- ; (-S)₂P(=O)- ; -(-S)P(=O)- ; -P(=S)( )₂; (-NR)₂P(=O)- ; (-NR)(-S)P(=O)- ; (-O)₂P(=O)- ; -(-O)P(=O)- ; -(-NR)P(=O)- ; (NR)₂P(=S)- ; (—NR)(—S)P=S)— ; (-O)(-NR)P(=S)- ; (-O)(-S)P(=S)- ; (-O)₂P(=S)- ; -(-O)P(=S)- ; and -(-NR)P₉=S)- ;
wherein the atom (A) is attached to the unsaturated heteroatom (E) which is attached to the sulfur, and the sulfur is linked via a group G to the silicon atom;
wherein each R is independently selected from hydrogen, and straight, cyclic or branched alkyl radicals containing from 1 to 18 carbon atoms and which may or may not contain unsaturation, alkenyl groups, aryl groups, aralkyl groups preferably containing from 1 to 18 carbon atoms;
wherein each G is independently selected from a monovalent or polyvalent group derived from substitution of alkyl, alkenyl, aryl or aralkyl group(s) wherein G can contain from 1 to 18 carbon atoms, providing however that G is not such that said mercaptoalkoxysilane contains an alpha-, or beta-unsaturated carbonyl including a carbon-to-carbon double bond next to the thiocarbonyl group, wherein if G is univalent (e.g. if p=0), then G can be a hydrogen atom;
wherein X is independently selected from the group consisting of -Cl, -GR, RO- , RC(=O), R₂C=NO- , R₂NO- , or R₂N- , -R, -(OSiR₂), (OSiR₃), wherein each R and G is as above and at least one X is not -R;
wherein Q is selected from oxygen, sulfur or (-NR- );
wherein A is selected from carbon, sulfur, phosphorous or sulfonyl;
wherein E is selected from oxygen, sulfur or NR;
wherein p is 0 through 5; r is 1 through 3; z is 0 through 2;, q is 0 through 6; a is 0 through 7; b is 1 through 3; j is 0 to 1, but j is 0 only if p is 1 and c is from 1 through 6, wherein j is preferably from 1 through 4; t is 0 through 5; s is 1 through 3; k is 1 or 2; and
wherein,
(A) if A is carbon, sulfur or sulfonyl, then
(1) a+b=2 and
(2) k=1;
(B) if A is phosphorus and a+b=c unless both
(1) c>1 and
(2) b=1, in which case a=c+1, and
(C) if A is phosphorus, then k is 2.

2. The method of claim 1, wherein alcohol and hydrogen halide byproducts formed by chemical reaction of said hydroxyl groups on said amorphous silica with alkoxy groups of said blocked mercaptoalkoxysilane and with alkoxy and/or halogen groups of said alkylsilane are removed from said hydrophobated amorphous silica composite.

3. The method of claim 1 or 2, wherein the unblocking agent is a nucleophile containing a hydrogen atom sufficiently labile such that hydrogen atom can be transferred to the site of the original blocking group to form the mercaptoalkoxysilane, and/or wherein said unblocking agent is a nucleophile selected from the group consisting of amines, imines and guanidines that contain at least one N-H bond.

4. The method of at least one of the previous claims, wherein said blocked mercaptoalkoxysilane is the blocked mercaptoalkoxysilane of Formula (II-A);
wherein said blocked mercaptoalkoxysilane is the blocked mercaptoalkoxysilane of Formula (II-A) wherein r=1 and s=1; Y is —C(=O)— ; and X is RO- ; and/or
wherein said unblocking agent is selected from at least one of N,N'-diphenylguanidine and N,N'-di-ortho-tolylguanidine.

5. The method of at least one of the previous claims, wherein for blocked mercaptoalkoxysilanes: Y is RC(=O)-, p = 0, r = 1, s = 1, X is (RO- ), R is an alkyl group having from 1 to 18 carbon atoms, and G is a monovalent alkyl radical having from 1 to 18 carbon atoms.

6. The method of at least one of the previous claims, wherein
(A) said alkylsilane is selected from the group consisting of trichloro methyl silane, dichloro dimethyl silane, chloro trimethyl silane, trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, and diethoxy dimethyl silane; and/or
(B) said blocked mercaptoalkoxysilanes are selected from at least one of the group consisting of
2-triethoxysilyl-1-ethyl thioacetate; 2-trimethoxysilyl-1-ethyl thioacetate;
2-(methyldimethoxysilyl)-1-ethyl thioacetate;
3-trimethoxysilyl-1-propyl thioacetate; triethoxysilylmethyl thioacetate;
trimethoxysilylmethyl thioacetate; triisopropoxysilylmethyl thioacetate;
methyldiethoxysilylmethyl thioacetate; methyldimethoxysilylmethyl thioacetate;
methyldiisopropoxysilylmethyl thioacetate;
dimethylethoxysilylmethyl thioacetate; dimethylmethoxysilylmethyl thioacetate;
dimethylisopropoxysilylmethyl thioacetate;
2-triisopropoxysilyl-1-ethyl thioacetate;
2-(methyldiethoxysilyl)-1-ethyl thioacetate;
2-(methyldiisopropoxysilyl)-1-ethyl thioacetate;
2-(dimethylethoxysilyl)-1-ethyl thioacetate;
2-(dimethylmethoxysilyl)-1-ethyl thioacetate;
2-(dimethylisopropoxysilyl)-1-ethyl thioacetate;
3-triethoxysilyl-1-propyl thioacetate; 3-triisopropoxysilyl-1-propyl thioacetate;
3-methyldiethoxysilyl-1-propyl thioacetate;
3-methyldimethoxysilyl-1-propyl thioacetate;
3-methyldiisopropoxysilyl-1-propyl thioacetate;
1-(2-triethoxysilyl-1-ethyl)-4-thioacetylcyclohexane;
1-(2-triethoxysilyl-1-ethyl)-3-thioacetylcyclohexane;
2-triethoxysilyl-5-thioacetylnorbornene; 2-triethoxysilyl-4-thioacetylnorbornene;
2-(2-triethoxysilyl-1-ethyl)-5-thioacetylnorbornene;
2-(2-triethoxysilyl-1-ethyl)-4-thioacetylnorbornene;
1-(1-oxo-2-thia-5-triethoxysilylpenyl)benzoic acid;
6-triethoxysilyl-1-hexyl thioacetate; 1-triethoxysilyl-5-hexyl thioacetate;
8-triethoxysilyl-1-octyl thioacetate; 1-triethoxysilyl-7-octyl thioacetate;
6-triethoxysilyl-1-hexyl thioacetate; 1-triethoxysilyl-5-octyl thioacetate;
8-trimethoxysilyl-1-octyl thioacetate; 1-trimethoxysilyl-7-octyl thioacetate;
10-triethoxysilyl-1-decyl thioacetate; 1-triethoxysilyl-9-decyl thioacetate;
1-triethoxysilyl-2-butyl thioacetate; 1-triethoxysilyl-3-butyl thioacetate;
1-triethoxysilyl-3-methyl-2-butyl thioacetate;
1-triethoxysilyl-3-methyl-3-butyl thioacetate;
3-trimethoxysilyl-1-propyl thiooctoate; 3-triethoxysilyl-1-propyl thiopalmitate;
3-triethoxysilyl-1-propyl thiooctoate; 3-triethoxysilyl-1-propyl thiobenzoate;
3-triethoxysilyl-1-propyl thio-2-ethylhexanoate;
3-methyldiacetoxysilyl-1-propyl thioacetate;
3-triacetoxysilyl-1-propyl thioacetate; 2-methyldiacetoxysilyl-1-ethyl thioacetate;
2-triacetoxysilyl-1-ethyl thioacetate; 1-methyldiacetoxysilyl-1-ethyl thioacetate;
1-triacetoxysilyl-1-ethyl thioacetate; 3-ethoxydidodecyloxy-1-propyl thioacetate;
3-ethoxyditetradecyloxy-1-propyl thioacetate;
3-ethoxyditetradecyloxy-1-propyl-thiooctoate;
3-ethoxydidodecyloxy-1-propyl-thiooctoate;
3-ethoxyditetradecyloxy-1-propyl thioacetate;
3-ethoxydidodecyloxy-1-propyl-th iooctate;
3-ethoxyditetradecyloxy-1-propyl-thiooctoate;
tris-(3-triethoxysilyl-1-propyl)trithiophosphate;
bis-(3-triethoxysilyl-1-propyl)methyldithiophosphonate;
bis-(3-triethoxysilyl-1-propyl)ethyldithiophosphonate;
3-triethoxysilyl-1-propyldimethylthiophosphinate;
3-triethoxysilyl-1-propyldiethylthiophosphinate;
tris-(3-triethoxysilyl-1-propyl)tetrathiophosphate;
bis-(3-triethoxysilyl-1-propyl)methyltrithiophosphonate;
bis-(3-triethoxysilyl-1-propyl)ethyltrithiophosphonate;
3-triethoxysilyl-1-propyldimethyldithiophosphinate;
3-triethoxysilyl-1-propyldiethyldithiophosphinate;
tris-(3-methyldimethoxysilyl-1-propyl)trithiophosphate;
bis-(3-methyldimethoxysilyl-1-propyl)methyldithiophosphonate;
bis-(3-methyldimethoxysilyl-1-propyl)ethyldithiophosphonate;
3-methyldimethoxysilyl-1-propyldimethylthiophosphinate;
3-methyldimethoxysilyl-1-propyldiethylthiophosphinate;
3-triethoxysilyl-1-propylmethylthiosulphate;
3-triethoxysilyl-1-propylmethanethiosulphonate;
3-triethoxysilyl-1-propylethanethiosulphonate;
3-triethoxysilyl-1-propylbenzenethiosulphonate;
3-triethoxysilyl-1-propyltoluenethiosulphonate;
3-triethoxysilyl-1-propylnaphthalenethiosulphonate;
3-triethoxysilyl-1-propylxylenethiosulphonate;
triethoxysilylmethylmethylthiosulphate;
triethoxysilylmethylmethanethiosulphonate;
triethoxysilylmethylethanethiosulphonate;
triethoxysilylmethylbenzenethiosulphonate;
triethoxysilylmethyltoluenethiosulphonate;
triethoxysilylmethylnaphthalenethiosulphonate and
triethoxysilylmethylxylenethiosulphonate.

7. A method of preparing a rubber composition, the method comprising:
(A) mixing at least one conjugated diene-based elastomer with an hydrophobated amorphous silica composite prepared according to at least one of the preceding claims 1 through 6;
(B) mixing an unblocking agent with the resulting mixture of step (A), and
(C) sulfur vulcanizing the resulting mixture.

8. The method of claim 7, wherein the chemical activity of the blocked mercapto group of said hydrophobated amorphous silica is substantially blocked insofar as interaction with said diene-based elastomer is concerned, wherein said blocked mercapto group of said hydrophobated amorphous silica is unblocked by said unblocking agent, and wherein said unblocked mercapto group interacts with at least one of said diene-based elastomers to couple said hydrophobated amorphous silica to at least one of said elastomers.

9. A method of preparing a rubber composition, the method comprising, based on parts by weight per 100 parts by weight (phr) of diene-based elastomer:
(A) mixing at least one conjugated diene-based elastomer with 10 to 120 phr of reinforcing filler at a temperature in a range of from 140°C to 170°C, wherein said reinforcing filler comprises
(1) an hydrophobated amorphous silica composite prepared according to at least one of the preceding claims 1 through 6, and, optionally,
(2) at least one additional reinforcing filler selected from carbon black and an additional synthetic amorphous silica, and optionally, a coupling agent for said additional synthetic amorphous silica,
(B) mixing an unblocking agent with the mixture of step (A) at a temperature in a range of from 100°C to 125°C and concurrently or thereafter mixing sulfur curative therewith at a temperature in a range of from 100°C to 125°C, and, thereafter,
(C) curing the resulting mixture at an elevated temperature in range of from 140°C to 170°C.

## Patentansprüche

1. Verfahren zur Herstellung eines Komposits aus hydrophobiertem amorphem Silika, welches das Reagieren des amorphen Silikas, das Hydroxylgruppen an seiner Oberfläche aufweist, mit einer Kombination eines blockierten Mercaptoalkoxysilans und eines Alkylsilans umfasst:
wobei das Alkylsilan die allgemeine Formel (I) hat:
(I) Zₙ - Si - R₄₋ₙ
wobei R ein gesättigtes Alkylradikal mit ein bis 18, bevorzugt ein bis 8, Kohlenstoffatomen ist, n ein Wert von 1 bis 3 ist und Z ein aus einem Chlor-, Brom- oder Alkoxyradikal ausgewähltes Radikal ist,
wobei das blockierte Mercaptoalkoxysilan aus blockierten Mercaptoalkoxysilanen der allgemeinen Formeln (II-A) und (II-B) ausgewählt ist:
(II-A) [[(ROC(=O))ₚ - (G)ⱼ]ₖ - Y - S]ᵣ - G - (Si-X₃)ₛ
(II-B) [(X₃Si)_{q} - G]ₐ - [Y - [S - G - SiX₃]_{b}]_{c}
wobei Y eine mehrwertige Spezies (Q₂)A(=E) ist, die bevorzugt ein Radikal ist, ausgewählt aus der Gruppe, bestehend aus -C(=NR)-; -SC(=NR)-; -SC(=O)-; (-NR)C(=O)-; (-NR)C(=S)-; -OC(=O); -OC(=S); C(=O); SC(=S); C(=S); S(=O); OS (=O) 2; (NR) S (=O)₂; SS (=O) -; -OS (=O)-; (-NR)S(=O)-; -SS (=O)₂-; (-S)₂P (=O) -; - (-S) P (=O)-; -P (=S) ( )₂; (-NR)₂P (=O) -; (-NR)(-S)P(=O)-; (-O)₂P(=O)-; -(-O)P(=O)-; - (-NR) P (=O) -; (NR)₂P (=S) -; (-NR) (-S) P=S)-; (-O)(-NR)P(=S)-; (-O(-S)P (=S) -; (-O)₂P(=S)-; -(-O)P(=S)- und -(-NR)P₉=S)-;
wobei das Atom (A) an dem ungesättigten Heteroatom (E) befestigt ist, das an dem Schwefel befestigt ist, und der Schwefel mittels einer Gruppe G mit dem Silikonatom verbunden ist;
wobei jedes R unabhängig aus Wasserstoff und geraden, zyklischen oder verzweigten Alkylradikalen ausgewählt ist, die 1 bis 18 Kohlenstoffatome enthalten, und die entweder Ungesättigtheit, Alkenylgruppen, Arylgruppen, Aralkylgruppen, die bevorzugt 1 bis 18 Kohlenstoffatome enthalten, enthalten können oder nicht;
wobei jedes G unabhängig aus einer einwertigen oder mehrwertigen Gruppe ausgewählt ist, die aus der Substitution von Alkyl-, Alkenyl-, Aryl- oder Aralkylgruppe(n) stammt, wobei G 1 bis 18 Kohlenstoffatome enthalten kann, vorausgesetzt jedoch, dass G nicht so ist, dass das Mercaptoalkoxysilan ein alpha- oder beta-ungesättigtes Carbonyl enthält, das eine Kohlenstoff-Kohlenstoff-Doppelbindung neben der Thiocarbonylgruppe umfasst, wobei, wenn G einwertig ist (z.B. wenn p=0), G dann ein Wasserstoffatom sein kann;
wobei X unabhängig aus der aus -Cl, -GR, RO-, RC(=O), R₂C=NO-, R₂NO- oder R₂N- , -R, -(OSiR₂) , (OSiR₃) bestehenden Gruppe ausgewählt ist, wobei jedes R und G ist wie vorangehend und mindestens ein X nicht -R ist;
wobei Q aus Sauerstoff, Schwefel oder (-NR-) ausgewählt ist;
wobei A aus Kohlenstoff, Schwefel, Phosphor oder Sulfonyl ausgewählt ist;
wobei E aus Sauerstoff, Schwefel oder NR ausgewählt ist;
wobei p 0 bis einschließlich 5 ist; r 1 bis einschließlich 3 ist; z 0 bis einschließlich 2 ist; q 0 bis einschließlich 6 ist; a 0 bis einschließlich 7 ist; b 1 bis einschließlich 3 ist; j 0 bis 1 ist, j jedoch nur dann 0 ist, wenn p 1 ist und c 1 bis einschließlich 6 ist, wobei j bevorzugt 1 bis einschließlich 4 ist; t 0 bis einschließlich 5 ist; s 1 bis einschließlich 3 ist; k 1 oder 2 ist; und
wobei
(A) wenn A Kohlenstoff, Schwefel oder Sulfonyl ist, dann
(1) a+b=2 und
(2) k=1;
(B) wenn A Phosphor ist und a+b=c, wenn nicht
(1) c>1 und
(2) b=1, in welchem Fall a=c+1, und
(C) wenn A Phosphor ist, dann ist k 2.

2. Verfahren nach Anspruch 1, wobei Alkohol und Wasserstoffhalidnebenprodukte, die durch chemische Reaktion der Hydroxylgruppen an dem amorphen Silika mit Alkoxygruppen des blockierten Mercaptoalkoxysilans und mit Alkoxy- und/oder Halogengrppen des Alkylsilans gebildet sind, von dem hydrophobierten amorphen Silikakomposit entfernt werden.

3. Verfahren nach Anspruch 1 oder 2, wobei das Deblockiermittel ein nukleophiles Reagens ist, das ein Wasserstoffatom enthält, das ausreichend labil ist, sodass das Wasserstoffatom zur Stelle der ursprünglichen Blockiergruppe übertragen werden kann, um das Mercaptoalkoxysilan zu bilden, und/oder wobei das Deblockiermittel ein nukleophiles Reagens ist, ausgewählt aus der aus Aminen, Iminen und Guanidinen, die mindestens eine N-H-Bindung enthalten, bestehenden Gruppe.

4. Verfahren nach mindestens einem der vorgenannten Ansprüche, wobei das blockierte Mercaptoalkoxysilan das blockierte Mercaptoalkoxysilan der Formel (II-A) ist;
wobei das blockierte Mercaptoalkoxysilan das blockierte Mercaptoalkoxysilan der Formel (II-A) ist, wobei r=1 und s=1; Y ist -C(=O)- und X ist RO-; und/oder
wobei das Deblockiermittel aus mindestens einem von N,N'-Diphenylguanidin und N,N'-Di-Orthotolylguanidin ausgewählt ist.

5. Verfahren nach mindestens einem der vorgenannten Ansprüche, wobei für blockierte Mercaptoalkoxysilane: Y RC (=O) - ist, p = 0, r = 1, s = 1, X ist (RO-), R ist eine Alkylgruppe mit 1 bis 18 Kohlenstoffatomen, und G ist ein einwertiges Alkylradikal mit 1 bis 18 Kohlenstoffatomen.

6. Verfahren nach mindestens einem der vorgenannten Ansprüche, wobei
(A) das Alkylsilan aus der Gruppe ausgewählt ist, bestehend aus Trichlormethylsilan, Dichlordimethylsilan, Chlortrimethylsilan, Trimethoxymethylsilan, Dimethoxydimethylsilan, Methoxytrimethylsilan, Trimethoxypropylsilan, Trimethoxyoctylsilan, Trimethoxyhexadecylsilan, Dimethoxydipropylsilan, Triethoxymethylsilan, Triethoxypropylsilan, Triethoxyoctylsilan und Diethoxydimethylsilan; und/oder
(B) die blockierten Mercaptoalkoxysilane ausgewählt sind aus mindestens einem aus der Gruppe, bestehend aus
2-Triethoxysilyl-1-ethylthioacetat;
2-Trimethoxysilyl-1-ethylthioacetat;
2-(Methyldimethoxysilyl)-1-ethylthioacetat;
3-Trimethoxysilyl-1-propylthioacetat;
Triethoxysilylmethylthioacetat;
Trimethoxysilylmethylthioacetat;
Triisopropoxysilylmethylthioacetat;
Methyldiethoxysilylmethylthioacetat;
Methyldimethoxysilylmethylthioacetat;
Methyldiisopropoxysilylmethylthioacetat;
Dimethylethoxysilylmethylthioacetat;
Dimethylmethoxysilylmethylthioacetat;
Dimethylisopropoxysilylmethylthioacetat;
2-Triisopropoxysilyl-1-ethylthioacetat;
2-(Methyldiethoxysilyl)-1-ethylthioacetat;
2-(Methyldiisopropoxysilyl)-1-ethylthioacetat;
2-(Dimethylethoxysilyl)-1-ethylthioacetat;
2-(Dimethylmethoxysilyl)-1-ethylthioacetat;
2-(Dimethylisopropoxysilyl)-1-ethylthioacetat;
3-Triethoxysilyl-1-propylthioacetat;
3-Triisopropoxysilyl-1-propylthioacetat;
3-Methyldiethoxysilyl-1-propylthioacetat;
3-Methyldimethoxysilyl-1-propylthioacetat;
3-Methyldiisopropoxysilyl-1-propylthioacetat;
1-(2-Triethoxysilyl-1-ethyl)-4-thioacetylcyclohexan;
1-(2-Triethoxysilyl-1-ethyl)-3-thioacetylcyclohexan;
2-Triethoxysilyl-5-thioacetylnorbornen;
2-Triethoxysilyl-4-thioacetylnorbornen;
2-(2-Triethoxysilyl-1-ethyl)-5-thioacetylnorbornen;
2-(2-Triethoxysilyl-1-ethyl)-4-thioacetylnorbornen;
1-(1-Oxo-2-thia-5-triethoxysilylphenyl)benzoesäure;
6-Triethoxysilyl-1-hexylthioacetat;
1-Triethoxysilyl-5-hexylthioacetat;
8-Triethoxysilyl-1-octylthioacetat;
1-Triethoxysilyl-7-octylthioacetat;
6-Triethoxysilyl-1-hexylthioacetat;
1-Triethoxysilyl-5-octylthioacetat;
8-Trimethoxysilyl-1-octylthioacetat;
1-Trimethoxysilyl-7-octylthioacetat;
10-Triethoxysilyl-1-decylthioacetat;
1-Triethoxysilyl-9-decylthioacetat;
1-Triethoxysilyl-2-butylthioacetat;
1-Triethoxysilyl-3-butylthioacetat;
1-Triethoxysilyl-3-methyl-2-butylthioacetat;
1-Triethoxysilyl-3-methyl-3-butylthioacetat;
3-Trimethoxysilyl-1-propylthiooctoat;
3-Triethoxysilyl-1-propylthiopalmitat;
3-Triethoxysilyl-1-propylthiooctoat;
3-Triethoxysilyl-1-propylthiobenzoat;
3-Triethoxysilyl-1-propylthio-2-ethylhexanoat;
3-Methyldiacetoxysilyl-1-propylthioacetat;
3-Triacetoxysilyl-1-propylthioacetat;
2-Methyldiacetoxysilyl-1-ethylthioacetat;
2-Triacetoxysilyl-1-ethylthioacetat;
1-Methyldiacetoxysilyl-1-ethylthioacetat;
1-Triacetoxysilyl-1-ethylthioacetat;
3-Ethoxydidodecyloxy-1-propylthioacetat;
3-Ethoxyditetradecyloxy-1-propylthioacetat;
3-Ethoxyditetradecyloxy-1-propylthiooctoat;
3-Ethoxydidodecyloxy-1-propylthiooctoat;
3-Ethoxyditetradecyloxy-1-propylthioacetat;
3-Ethoxydidodecyloxy-1-propylthiooctat;
3-Ethoxyditetradecyloxy-1-propylthiooctoat;
Tris-(3-triethoxysilyl-1-propyl)trithiophosphat;
Bis-(3-triethoxysilyl-1-propyl)methyldithiophosphonat;
Bis-(3-triethoxysilyl-1-propyl)ethyldithiophosphonat;
3-Triethoxysilyl-1-propyldimethylthiophosphinat;
3-Triethoxysilyl-1-propyldiethylthiophosphinat;
Tris-(3-triethoxysilyl-1-propyl)tetrathiophosphat;
Bis-(3-triethoxysilyl-1-propyl)methyltrithiophosphonat;
Bis-(3-triethoxysilyl-1-propyl)ethyltrithiophosphonat;
3-Triethoxysilyl-1-propyldimethyldithiophosphinat;
3-Triethoxysilyl-1-propyldiethyldithiophosphinat;
Tris-(3-methyldimethoxysilyl-1-propyl)trithiophosphat;
Bis-(3-methyldimethoxysilyl-1-propyl)methyldithiophosphonat;
Bis-(3-methyldimethoxysilyl-1-propyl)ethyldithiophosphonat;
3-Methyldimethoxysilyl-1-propyldimethylthiophosphinat;
3-Methyldimethoxysilyl-1-propyldiethylthiophosphinat;
3-Triethoxysilyl-1-propylmethylthiosulfat;
3-Triethoxysilyl-1-propylmethanthiosulfonat;
3-Triethoxysilyl-1-propylethanthiosulfonat;
3-Triethoxysilyl-1-propylbenzolthiosulfonat;
3-Triethoxysilyl-1-propyltoluolthiosulfonat;
3-Triethoxysilyl-1-propylnaphthalenthiosulfonat;
3-Triethoxysilyl-1-propylxylolthiosulfonat;
Triethoxysilylmethylmethylthiosulfat;
Triethoxysilylmethylmethanthiosulfonat;
Triethoxysilylmethylethanthiosulfonat;
Triethoxysilylmethylbenzolthiosulfonat;
Triethoxysilylmethyltoluolthiosulfonat;
Triethoxysilylmethylnaphthalenthiosulfonat und
Triethoxysilylmethylxylolthiosulfonat.

7. Verfahren zur Herstellung einer Kautschukzusammensetzung, wobei das Verfahren umfasst:
(A) Mischen mindestens eines Elastomers auf Basis konjugierten Diens mit einem hydrophobierten amorphen Silikakomposit, hergestellt nach mindestens einem der vorangehenden Ansprüche 1 bis einschließlich 6;
(B) Mischen eines Deblockiermittels mit dem resultierenden Gemisch von Schritt (A), und
(C) Schwefelvulkanisieren des resultierenden Gemischs.

8. Verfahren nach Anspruch 7, wobei die chemische Aktivität der blockierten Mercaptogruppe des hydrophobierten amorphen Silikas im Wesentlichen blockiert ist, soweit die Wechselwirkung mit dem Elastomer auf Basis von Dien betroffen ist, wobei die blockierte Mercaptogruppe des hydrophobierten amorphen Silikas von dem Deblockiermittel deblockiert wird, und
wobei die deblockierte Mercaptogruppe mit mindestens einem der Elastomere auf Basis von Dien in Wechselwirkung tritt, um das hydrophobierte amorphe Silika an mindestens eines der Elastomere zu koppeln.

9. Verfahren zur Herstellung einer Kautschukzusammensetzung, wobei das Verfahren umfasst, auf Basis von Gewichtsteilen pro 100 Gewichtsteile (ThK) von Elastomer auf Basis von Dien:
(A) Mischen mindestens eines Elastomers auf Basis konjugierten Diens mit 10 bis 120 ThK Verstärkungsfüllstoff auf einer Temperatur in einem Bereich von 140°C bis 170°C, wobei der Verstärkungsfüllstoff umfasst:
(1) ein hydrophobiertes amorphes Silikakomposit, hergestellt nach mindestens einem der vorangehenden Ansprüche 1 bis einschließlich 6, und optional
(2) mindestens einen zusätzlichen Verstärkungsfüllstoff, ausgewählt aus Carbon Black und einem zusätzlichen synthetischen amorphen Silika, und optional ein Kopplungsmittel für das zusätzliche synthetische amorphe Silika,
(B) Mischen eines Deblockiermittels mit dem Gemisch von Schritt (A) auf einer Temperatur in einem Bereich von 100°C bis 125°C und damit einhergehend oder danach damit Mischen von Schwefelvulkanisationsmittel auf einer Temperatur in einem Bereich von 100°C bis 125°C, und danach
(C) Vulkanisieren des resultierenden Gemischs auf einer erhöhten Temperatur in einem Bereich von 140°C bis 170°C.

## Revendications

1. Procédé de préparation d'un composite d'une silice amorphe qui a été rendue hydrophobe, qui comprend la mise en réaction de ladite silice amorphe possédant des groupes hydroxyle sur sa surface avec une combinaison d'un mercaptoalcoxysilane et d'un alkylsilane ;
dans lequel ledit alkylsilane répondant à la formule générale (I) :
**(I)** **Zₙ-Si-R₄₊ₙ**
dans laquelle R représente un radical alkyle saturé contenant de 1 à 18, de préférence de 1 à 8 atomes de carbone, n représente une valeur de 1 à 3, et Z représente un radical choisi parmi un radical de chlore, un radical de brome ou un radical alcoxy ;
ledit mercaptoalcoxysilane bloqué est choisi parmi des mercaptoalcoxysilanes bloqués répondant aux formules générales (II-A) et (II-B) :
**(II-A)** **[[(ROC(=O))ₚ-(G)_{J}]ₖ-Y-S]ᵣ-G -(SiX₃)ₛ.**
**(II-B)** **[(X₃Si)_{q}- C]ₐ-[Y-[S-G- SiX₃]_{b}]_{c}**
dans lesquelles Y représente une espèce polyvalente (Q₂)A(=E), qui représente de préférence un radical choisi parmi le groupe constitué par un groupe -C(=NR)-; un groupe -SC(=NR)- ; un groupe -SC(=O)- ; un groupe (-NR)C(=O)- ; un groupe (-NR)C(=S) ; un groupe -OC(=O) ; un groupe OC(=S) ; un groupe C(=O) ; un groupe SC(=S) ; un groupe C(=S) ; un groupe S(=O); un groupe OS(=O)2 ; un groupe (NR)S(=O)₂ ; un groupe SS(=O)- ; un groupe -OS(=O)-; un groupe (-NR)S(=O)- ; un groupe -SS (=O)₂ ; un groupe (-S)₂P (=O) - ; un groupe - (-S) P (=O)- ; un groupe -P (=S ) ( )₂; un groupe (-NR)₂P (=O) - ; un groupe (-NR)(-S)P(=O)- ; un groupe (-O)₂P(=O)- ; un groupe - (-O)P (=O)- ; un groupe —(—NR)P(=O)— ; un groupe (NR)₂P(=S)- ; un groupe (-NR)(-S)P=S)- ; un groupe (-O)(-NR)P(=S)- ; un groupe (-O)(-S)P(=S)- ; un groupe (-O)₂P(=S)- ; un groupe -(-O)P(=S)- ; et un groupe - (-NR) P₉=S)-;
dans lesquelles l'atome (A) est fixé à l'hétéroatome insaturé (E) qui est fixé à l'atome de soufre, et l'atome de soufre est lié via un groupe G un atome de silicium ;
dans lesquelles chaque radical R est choisi de manière indépendante parmi le groupe comprenant un atome d'hydrogène et des radicaux alkyle à chaîne droite, cyclique ou ramifiée, contenant de 1 à 18 atomes de carbone, et qui peuvent contenir une insaturation ou non, des groupes alcényle, des groupes aryle, des groupes alkyle contenant de préférence de 1 à 18 atomes de carbone ;
dans lesquelles chaque radical G est choisi de manière indépendante parmi le groupe comprenant un groupe monovalent ou un groupe polyvalent qui dérive d'une substitution d'un ou de plusieurs groupes alkyle, alcényle, aryle ou aralkyle, le radical G pouvant contenir de 1 à 18 atomes de carbone, à condition toutefois que le radical G ne représente pas un radical tel que ledit mercaptoalcoxysilane contient un groupe carbonyle à insaturation alpha ou bêta, y compris une double liaison de carbone-carbone à côté du groupe thiocarbonyle, et dans lequel lorsque G est univalent (par exemple si p=0), alors G peut représenter un atome d'hydrogène ;
dans lesquelles le radical X est choisi de manière indépendante parmi le groupe constitué par un groupe -Cl, un groupe -GR, un groupe RO-, un groupe RC (=O) , un groupe R₂C=NO-, un groupe R₂NO-, ou un groupe R₂N-, un groupe -R, un groupe -(OSiR₂), un groupe (OSiR₃), chacun des radicaux R et G étant tel qu'indiqué ci-dessus et au moins un radical X ne représentant pas un groupe -R ;
dans lesquelles le radical Q est choisi parmi le groupe comprenant un atome d'oxygène, un atome de soufre ou un groupe ( -NR- ) ;
dans lesquelles le radical A est choisi parmi le groupe comprenant un atome de carbone, un atome de soufre, un atome de phosphore ou un groupe sulfonyle ;
dans lesquelles le radical E est choisi parmi le groupe comprenant un atome d'oxygène, un atome de soufre ou un groupe NR ;
dans lesquelles p possède une valeur de 0 à 5 ; r possède une valeur de 1 à 3 ; z possède une valeur de 0 à 2 ; q possède une valeur de 0 à 6; a possède une valeur de 0 à 7 ; b possède une valeur de 1 à 3 ; j possède une valeur de 0 à 1, mais j est uniquement égal à 0 lorsque p est égal à 1 et c possède une valeur de 1 à 6, j possédant de préférence une valeur de 1 à 4 ; t possède une valeur de 0 à 5 ; s possède une valeur de 1 à 3 ; k est égal à 1 ou 2 ; et
dans lesquelles
(A) lorsque le radical A représente un atome de carbone, un atome de soufre ou un groupe sulfonyle,
(1) a+b = 2 et
(2) k = 1 ;
(B) lorsque le radical A représente un atome de phosphore et a+b = c à moins que
(1) c > 1 et
(2) b = 1, dans ce cas a = c+1, et
(C) lorsque le radical A représente un atome de phosphore, k est égal à 2.

2. Procédé selon la revendication 1, dans lequel on élimine les sous-produits d'alcools et d'acides halogénhydriques formés par la réaction chimique desdits groupe hydroxyle sur ladite silice amorphe avec des groupes alcoxy dudit mercaptoalcoxysilane bloqué et avec les groupes alcoxy et/ou les atomes d'halogène dudit alkylsilane sont éliminés dudit composite de silice amorphe qui a été rendu hydrophobe.

3. Procédé selon la revendication 1 ou 2, dans lequel l'agent de déblocage est un réactif nucléophile contenant un atome d'hydrogène suffisamment labile pour permettre audit atome d'hydrogène d'être transféré au site du groupe blocage initial pour former le mercaptoalcoxysilane et/ou dans lequel ledit agent de déblocage est un réactif nucléophile choisi parmi le groupe constitué par des amines, des imines et des guanidines qui contiennent au moins une liaison N-H.

4. Procédé selon au moins une des revendications précédentes, dans lequel ledit mercaptoalcoxysilane bloqué représente le mercaptoalcoxysilane bloqué répondant à la formule (II-A);
dans lequel ledit mercaptoalcoxysilane bloqué représente le mercaptoalcoxysilane bloqué répondant à la formule (II-A) dans laquelle r = 1 et s = 1 ; le radical Y représente un groupe-C(=O)- et le radical X représente un groupe RO- ; et/ou
dans lequel ledit agent de déblocage représente au moins un membre choisi parmi le groupe comprenant la N,N'-diphénylguanidine et la N,N'di-ortho-tolylguanidine.

5. Procédé selon au moins une des revendications précédentes, dans lequel, pour ledit mercaptoalcoxysilane bloqué : Y représente un groupe RC (=O)- , p = 0, r = 1, s = 1, X représente un groupe (RO- ), R représente un groupe alkyle contenant de 1 à 18 atome de carbone, et G représente un radical alkyle monovalent contenant de 1 à 18 atomes de carbone.

6. Procédé selon au moins une des revendications précédentes, dans lequel
(A) ledit alkylsilane est choisi parmi le groupe constitué par le trichloro méthyl silane, le dichloro diméthyl silane, le chloro triméthyl silane, le triméthoxy méthyl silane, le diméthoxy diméthyl silane, le méthoxy triméthyl silane, le triméthoxy propyl silane, le triméthoxy octyl silane, le triméthoxy hexadécyl silane, le diméthoxy dipropyl silane, le triéthoxy méthyl silane, le triéthoxy propyl silane, le triéthoxy octyl silane, et le diéthoxy diméthyl silane ; et/ou
(B) lesdits mercaptoalcoxysilanes bloqués représentent au moins un membre choisi parmi le groupe constitué par le thioacétate de 2-triéthoxysilyl-1-éthyle ; le thioacétate de 2-triméthoxysilyl-1-éthyle ; le thioacétate de 2-(méthyldiméthoxysilyl)-1-éthyle ; le thioacétate de 3-triméthoxysilyl-1-propyle ; le thioacétate de triéthoxysilylméthyle ; le thioacétate de triméthoxysilylméthyle ; le thioacétate de triisopropoxysilylméthyle ; le thioacétate de méthyldiéthoxysilylméthyle ; le thioacétate de méthyldiméthoxysilylméthyle ; le thioacétate de méthyldiisopropoxysilylméthyle ; le thioacétate de diméthyléthoxysilylméthyle ; le thioacétate de diméthylméthoxysilylméthyle ; le thioacétate de diméthylisopropoxysilylméthyle ; le thioacétate de 2-triisopropoxysilyl-1-éthyle ; le thioacétate de 2-(méthyldiéthoxysilyl)-1-éthyle ; le thioacétate de 2-(méthyldiisopropoxysilyl)-1-éthyle ; le thioacétate de 2-(diméthyléthoxysilyl)-1-éthyle ; le thioacétate de 2-(diméthylméthoxysilyl)-1-éthyle ; le thioacétate de 2-(diméthylisopropoxysilyl)-1-éthyle ; le thioacétate de 3-triéthoxysilyl-1-propyle ; le thioacétate de 3-triisopropoxysilyl-1-propyle ; le thioacétate de 3-méthyldiéthoxysilyl-1-propyle ; le thioacétate de 3-méthyldiméthoxysilyl-1-propyle ; le thioacétate de 3-méthyldiisopropoxysilyl-1-propyle ; le 1-(2-triéthoxysilyl-1-éthyl)-4-thioacétylcyclohexane ; le 1-(2-triéthoxysilyl-1-éthyl)-3-thioacétylcyclohexane ; le 2-triéthoxysilyl-5-thioacétylnorbornène ; le 2-triéthoxysilyl-4-thioacétylnorbornène ; le 2-(2-triéthoxysilyl-1-éthyl)-5-thioacétylnorbornène ; le 2-(2-triéthoxysilyl-1-éthyl)-4-thioacétylnorbornène ; l'acide 1-(1-oxo-2-thia-5-triéthoxysilylphényl)benzoïque ; le thioacétate de 6-triéthoxysilyl-1-hexyle ; le thioacétate de 1-triéthoxysilyl-5-hexyle ; le thioacétate de 8-triéthoxysilyl-1-octyle ; le thioacétate de 1-triéthoxysilyl-7-octyle ; le thioacétate de 6-triéthoxysilyl-1-hexyle ; le thioacétate de 1-triéthoxysilyl-5-octyle ; le thioacétate de 8-triméthoxysilyl-1-octyle ; le thioacétate de 1-triméthoxysilyl-7-octyle ; le thioacétate de 10-triéthoxysilyl-1-décyle ; le thioacétate de 1-triéthoxysilyl-9-décyle ; le thioacétate de 1-triéthoxysilyl-2-butyle ; le thioacétate de 1-triéthoxysilyl-3-butyle ; le thioacétate de 1-triéthoxysilyl-3-méthyl-2-butyle ; le thioacétate de 1-triéthoxysilyl-3-méthyl-3-butyle ; le thiooctoate de 3-triméthoxysilyl-1-propyle ; le thiopalmitate de 3-triéthoxysilyl-1-propyle ; le thiooctoate de 3-triéthoxysilyl-1-propyle ; le thiobenzoate de 3-triéthoxysilyl-1-propyle ; le thio-2-éthylhexanoate de 3-triéthoxysilyl-1-propyle ; le thioacétate de 3-méthyldiacét oxysilyl-1-propyle ; le thioacétate de 3-triacétoxysilyl-1-propyle ; le thioacétate de 2-méthyldiacétoxysilyl-1-éthyle ; le thioacétate de 2-triacétoxysilyl-1-éthyle ; le thioacétate de 1-méthyldiacétoxysilyl-1-éthyle ; le thioacétate de 1-triacétoxysilyl-1-éthyle ; le thioacétate de 3-éthoxydidodéc yloxy-1-propyle ; le thioacétate de 3-éthoxyditetradécyloxy-1-propyle ; le thiooctoate de 3-éthoxyditétradécyloxy-1-propyle ; le thiooctoate de 3-éthoxydidodécyloxy-1-propyle ; le thioacétate de 3-éthoxyditetradécyloxy-1-propyle ; le thiooctate de 3-éthoxydidodécyloxy-1-propyle ; le thiooctoate de 3-éthoxyditétradécyloxy-1-propyle ; le tris-(3-triéthoxysilyl-1-propyl)trithiophosphate ; le bis-(3-triéthoxysilyl-1-propyl)méthyldithiophosphonate ; le bis-(3-triéthoxysilyl-1-propyl)éthyldithiophosphonate ; le 3-triéthoxysilyl-1-propyldiméthylthiophosphinate ; le 3-triéthoxysilyl-1-propyldiéthylthiophosphinate ; le tris-(3-triéthoxysilyl-1-propyl)tétrathiophosphate ; le bis-(3-triéthoxysilyl-1-propyl)méthyltrithiophosphonate ; le bis-(3-triéthoxysilyl-1-propyl)éthyltrithiophosphonate ; le 3-triéthoxysilyl-1-propyldiméthyldithiophosphinate ; le 3-triéthoxysilyl-1-propyldiéthyldithiophosphinate ; le tris-(3-méthyldiméthoxysilyl-1-propyl)trithiophosphate ; le bis-(3-méthyldiméthoxysilyl-1-propyl)méthyldithiophosphonate ; le bis-(3-méthyldiméthoxysilyl-1-propyl)éthyldithiophosphonate ; le 3-méthyldiméthoxysilyl-1-propyldiméthylthiophosphinate ; le 3-méthyldiméthoxysilyl-1-propyldiéthylthiophosphinate ; le 3-triéthoxysilyl-1-propylméthylthiosulphate ; le 3-triéthoxysilyl-1-propylméthanéthiosulphonate ; le 3-triéthoxysilyl-1-propyléthanéthiosulphonate ; le 3-triéthoxysilyl-1-propylbenzènethiosulphonate ; le 3-triéthoxysilyl-1-propyltoluènethiosulphonate ; le 3-triéthoxysilyl-1-propylnaphthalènethiosulphonate ; le 3-triéthoxysilyl-1-propylxylènethiosuiphonate ; le triéthoxysilylméthylméthylthiosulphate ; le triéthoxysilylméthylméthanethiosulphonate ; le triéthoxysilylméthyléthanethiosulphonate ; le triéthoxysilylméthylbenzènethiosulphonate ; le triéthoxysilylméthyltoluènethiosulphonate ; le triéthoxysilylméthylnaphthalènethiosulphonate et le triéthoxysilylméthylxylènethiosulphonate.

7. Procédé de préparation d'une composition de caoutchouc, le procédé comprenant le fait de :
(A) mélanger au moins un élastomère à base de diène conjugué avec un composite de silice amorphe rendue hydrophobe, préparé conformément à au moins une des revendications précédentes 1 à 6 ;
(B) mélanger un agent de déblocage avec le mélange résultant de l'étape (A) ; et
(C) vulcaniser au soufre le mélange résultant.

8. Procédé selon la revendication 7, dans lequel l'activité chimique du groupe mercapto bloquée de ladite silice amorphe rendue hydrophobe est essentiellement bloquée en ce qui concerne son interaction avec ledit élastomère à base diénique, et dans lequel ledit groupe mercapto débloqué interagit avec au moins un des élastomères à base diénique pour coupler ladite silice amorphe rendue hydrophobe à au moins un desdits élastomères.

9. Procédé pour préparer une composition de caoutchouc, le procédé comprenant le fait de, en se basant sur des parties en poids par 100 parties en poids phr d'élastomères à base diénique :
(A) mélanger au moins un élastomère à base de diène conjugué avec de 10 à 120 phr d'une matière de charge pour le renforcement à une température dans la plage de 140 °C à 170 °C, ladite matière de charge pour le renforcement comprenant .
(1) un composé de silice amorphe rendue hydrophobe, préparé conformément à au moins une des revendications précédentes 1 à 6, et, le cas échéant ;
(2) au moins une matière de charge pour le renforcement supplémentaire choisi parmi le groupe comprenant du noir de carbone et une silice amorphe synthétique supplémentaire et, le cas échéant, un agent de couplage pour ladite silice amorphe synthétique supplémentaire ;
(B) mélanger un agent de déblocage avec le mélange de l'étape (A) à une température dans la plage de 100 °C à 125 °C et de manière concourante ou par la suite y mélanger un agent de vulcanisation au soufre à une température dans la plage de 100 °C à 125 °C ; et, par la suite
(C) vulcaniser de mélange résultant à une température élevée dans la plage de 140 °C à 170 °C.
